# EUROPÄISCHE PATENTSCHRIFT

(11) **EP 3 371 130 B1**
(45) Veröffentlichungstag und Bekanntmachung des Hinweises auf die Patenterteilung: **23.10.2019**
(21) Anmeldenummer: 16788535.9
(22) Anmeldetag: 31.10.2016
(51) Int. Cl.: C04B 40/00, C04B 40/06, C04B 111/00

(54) **SCHNELLTROCKNENDE 2-K-BESCHICHTUNGSMASSE UND VERFAHREN ZU DEREN HERSTELLUNG**
FAST DRYING 2-K-COATING COMPOSITION AND METHOD FOR MANUFACTURING IT
2-C-MASSE DE REVETEMENT A SECHAGE RAPIDE ET METHODE DE SA PRODUCTION

(30) Priorität: 02.11.2015 EP 15192588
(43) Veröffentlichungstag der Anmeldung: 12.09.2018
(73) Patentinhaber: BASF SE, 67056 Ludwigshafen am Rhein (DE)
(72) Erfinder: SEIP, Klaus, 67112 Mutterstadt (DE)
(74) Vertreter: BASF IP Association
(86) Internationale Anmeldenummer: PCT/EP2016/076234
(87) Internationale Veröffentlichungsnummer: WO 2017/076807

(56) Entgegenhaltungen:
- EP-A1- 2 607 330
- EP-A2- 1 182 179
- EP-A2- 2 679 560
- WO-A1-2009/132967
- DE-A1- 19 812 246
- DE-A1-102005 053 336
- DE-A1-102010 041 291
- DE-A1-102013 007 937
- JP-A- H04 300 231
- JP-A- 2000 211 961

## Beschreibung

Die Erfindung betrifft eine schnelltrocknende wässrige Beschichtungsmasse sowie ein Verfahren zu ihrer Herstellung.

Schnelltrocknende Beschichtungsmassen werden in einem weiten Anwendungsbereich eingesetzt. Beispielsweise werden sie, in flüssiger oder pastöser Form aufgetragen, eingesetzt für die Herstellung von Abdichtungssystemen, wie die Abdichtung im Verbund mit Fliesen, Abdichtungen von Flüssigkeitsbehältern, Bauwerksabdichtungen an der Gebäudehülle (Dach, Balkone, Terrassen, Keller), Infrastrukturgebäuden wie Brücken, Wasserver- und -entsorgungsanlagen, sowie Tunnelbauwerken. Abdichtungsmembranen dieser Art sind aus dem Stand der Technik bekannt, beispielsweise als zweikomponentige (Pulverkomponente + Dispersionskomponente) oder einkomponentige (Pulver) mineralische Dichtungsschlämme. Weiterhin gibt es pastöse, dispersionsgebundene und reaktive Abdichtungssysteme. Zum einen sollen die Systeme einen ausreichenden Schutz gegen das Eindringen von Flüssigkeiten in den Untergrund bieten, zum anderen eine rissüberbrückende Funktion gewährleisten. Im Bereich der Verbundabdichtung kommt noch die Entkopplung zum Untergrund hinzu.

Mineralische Dichtungsschlämme weisen einen relativ hohen Zement- und Polymergehalt auf und sind daher in den Rissüberbrückungseigenschaften und im Schwundverhalten nicht zufriedenstellend. Besonders bei dickeren Schichten ist die Rissneigung solcher Systeme ausgeprägt, was den Einsatz von Armierungsgeweben im Bereich von kritischen Gebäudegeometrien führt (z.B. in Ecken oder Kanten). Besonders bei den hochflexiblen zementären Dichtungsschlämmen ist nur ein eingeschränkter Hydratationsgrad gegeben, was im Nachhinein zu Posthydratation und Nachversprödung der Abdichtungsschicht führen kann.

Pastöse Systeme ergeben im Vergleich zu mineralischen Systemen Abdichtungen mit deutlich besserer Flexibilität, haben aber Limitierungen hinsichtlich der Durchtrocknung besonders unter kritischen Umgebungsbedingungen wie hoher Luftfeuchtigkeit und niedriger Temperatur. Auch die Frost-/Taustabilität der pastösen Systeme ist eingeschränkt, so dass diese nur im Innenbereich eingesetzt werden.

Reaktivsysteme wie PU- oder Epoxysysteme weisen im Bereich der Verbundabdichtung nach der Trocknung Probleme des Haftverbundes mit den Decksystemen auf (z.B. Fliesen).

Außerdem sind diese Systeme teilweise hautsensibilisierend und gegebenenfalls sogar toxisch.

Im Bereich der mineralischen Dichtungsschlämme werden heute neben den OPC-Zementen (OPC: ordinary Portland cement) auch Schnellzemente (HAC, CSA etc.) sowie Calciumsulfatbinder eingesetzt. So beschreibt die US 2010/015589 ein Zweikomponentensystem, dessen eine Komponente in pastöser wässriger Phase einen passivierten Aluminatzement, Borsäure und einen Verflüssiger enthält und dessen andere Komponente einen Initiator in wässriger Phase enthält. Der Initiator (Beschleuniger) ist ein Gemisch aus Lithiumhydroxid und Lithiumsulfat oder Lithiumcarbonat. Dieses System härtet in weniger als 5 Minuten und ergibt innerhalb von 15 Minuten einen Beton mit einer Druckfestigkeit von 10-15 MPa. Allerdings ist es erforderlich, den Initiator mit beträchtlichem Mischaufwand homogen in die pastöse Masse einzuarbeiten. Die EP 2 607 330 A1 beschreibt eine Putzmasse, die auf ein Dämmelement aufgetragen wird. Sie umfasst einen pastösen ersten Teil und einen zweiten Teil, der vor dem Auftragen mit dem ersten Teil zu vermischenden ist. Der erste Teil enthält mineralische Bindemittel, wie Calciumaluminatzement, organische Bindemittel, wie Polymerdispersionen oder Silikonharzdispersionen und einen sauren Verzögerer, wie Borsäure. Der zweite Teil umfasst einen in wässriger Phase vorliegenden Beschleuniger, wie Lithiumhydroxid, Lithiumcarbonat oder Lithiumsulfat. Die WO 2014/180859 beschreibt ein mineralisches hydraulisches Bindemittel auf Basis eines Calciumsulfoaluminat-Klinkers, das einen Aktivator für die hydraulische Reaktion des Calciumsulfoaluminats, eine Zinkionen freisetzende Zinkkomponente und einen Erstarrungsverzögerer umfasst. Die US 2014/0343194 beschreibt stabilisierte wässrige Schnellzementsuspensionen mit hoher Lagerstabilität. Sie enthalten eine phosphorhaltige Verbindung, wie Phosphorsäure, zur Passivierung des Schnellzements. Die Reaktivierung des Zements erfolgt mit einem Beschleuniger, wie Lithiumsulfat, Lithiumcarbonat, Lithiumchlorid oder Lithiumfluorid.

Ziel ist es hierbei Schnellsysteme zu formulieren, die eine wesentlich schnellere Durchhärtung der Beschichtungen auch unter ungünstigen Bedingungen, wie hoher Luftfeuchte und tiefen Temperaturen, zeigen. Neben dem Einsatz der Schnellzemente und Calciumsulfatbinder kommen auch weitere puzzolanische Materialien, wie Schlacke, Hüttensande, Mikrosilika und Flugasche, zum Einsatz. Dies verbessert gegenüber den Portlandzementen mit hohem Klinkeranteil die CO₂-Bilanz der Systeme. Auch der Schwund wird durch den Einsatz von Schnellzementen reduziert, siehe US 4746365.

Der vorliegenden Erfindung liegt die Aufgabe zugrunde, die Nachteile des Standes der Technik zu vermeiden und Beschichtungsmassen zur Verfügung zu stellen, die sich einfach herstellen und zu Abdichtungen mit akzeptablen Rissüberbrückungseigenschaften verarbeiten lassen und auch bei hoher Luftfeuchtigkeit und/oder niedriger Temperatur rasch und vollständig trocknen.

Diese Aufgabe wird gelöst durch ein Verfahren zur Herstellung einer wässrigen Beschichtungsmasse zur Applikation auf ein Substrat, wobei das Verfahren die folgenden Schritte in der angegebenen Reihenfolge umfasst:
A) Bereitstellung einer wässrigen pastösen ersten Komponente (a) durch
   (a1) Vermischen von mindestens einem schnell härtenden hydraulischen Bindemittel, ausgewählt unter Calciumaluminatzement, Calciumsulfo-aluminatzement oder einer Mischung davon, und
   (a2) mindestens einem Verzögerer, ausgewählt unter Borsäure, ortho-Phosphorsäure, meta-Phosphorsäure, Phosphonsäure (phosphorige Säure), einem organischen Phosphonsäurederivat und Gemischen davon,
   (a3) Zugabe mindestens eines Härtungsbeschleunigers, ausgewählt unter Lithiumsulfat, Lithiumacetat oder einer Mischung davon, in das Gemisch aus (a1) und (a2),
   (a4) Zugabe mindestens eines organischen polymeren Bindemittels in das Gemisch aus (a1) bis (a3), und
B) Zugabe einer zweiten Komponente (b), die mindestens einen Aktivator umfasst, wobei der Aktivator ein Alkalimetallhydroxid ist.

Die pastöse erste Komponente umfasst ein schnell härtendes hydraulisches Bindemittel (a1). Dabei handelt es sich um Aluminatzemente, nämlich Calciumaluminatzement, Calciumsulfoaluminatzement oder ein Gemisch davon. Das schnell härtende hydraulische Bindemittel kann neben dem Aluminatzement auch weitere puzzolanische Materialien wie Portlandzement, Schlacke, Hüttensande, Mikrosilika und Flugasche enthalten. Dies verbessert gegenüber den Portlandzementen mit hohem Klinkeranteil die CO₂-Bilanz der Systeme. Die Menge an weiteren puzzolanischen Materialien muss so bemessen sein, dass die Eigenschaften des Bindemittels nicht signifikant beeinträchtigt werden. Sie liegt im Allgemeinen im Bereich von 0,1 bis 20 Gew.-%, bezogen auf das Gewicht des schnell härtenden hydraulischen Bindemittels.

In einem ersten Schritt wird das schnell härtende hydraulische Bindemittel mit einem Verzöger (a2) vermischt. Der Verzögerer (a2) dient zur Passivierung des schnell härtenden hydraulischen Bindemittels (a1), um zu verhindern, dass dieses vorzeitig abbindet. Geeignete Verzögerer sind saure Verbindungen, die ausgewählt sind unter Borsäure, ortho-Phosphorsäure, meta-Phosphorsäure, Phosphonsäure (phosphorige Säure) und organischen Phosphonsäurederivaten. Geeignete Verzögerer sind auch Derivate der erwähnten Säuren, die in wässrigem Medium diese Säuren bilden. Beispiele hierfür sind Phosphorpentoxid, Phosphortrioxid, Pyrophosphorsäure oder Tripolyphosphorsäure. Geeignete Phosphonsäurederivate sind beispielsweise Aminotrimethylenphosphonsäure, Aminoethylphosphonsäure, 1 -Hydroxyethyliden-1,1 -diphosphonsäure, Tetramethylendiamintetramethylenphosphonsäure, Hexaamethylendiamin-tetramethylenphosphonsäure, Diethylentriamin-pentamethylenphosphonsäure, Phosphonobutantricarbonsäure, N-(phosphonomethyl)iminodiessigsäure, 2-Carboxyethylphosphonsäure oder 2-Hydroxyphosphonocarbonsäure. Bevorzugte Verzögerer sind Borsäure und ortho-Phosphorsäure.

In einer Ausführungsform wird eine wässrige Lösung des Verzögerers vorgelegt und das schnell härtende hydraulische Bindemittel in die wässrige Lösung eingebracht, zweckmäßigerweise unter Rühren.

In die Suspension, die das schnell härtende hydraulische Bindemittel und den Verzögerer enthält, wird dann mindestens ein Härtungsbeschleuniger (a3) eingebracht, der ausgewählt ist unter Lithiumsulfat, Lithiumacetat oder einer Mischung davon und mit der Suspension vermischt. Der Härtungsbeschleuniger kann neben Lithiumsulfat, Lithiumacetat oder einer Mischung davon auch weitere Härtungsbeschleuniger in einer Menge bis zu 50 Gew.-%, bezogen auf das Gesamtgewicht des Härtungsbeschleunigers, enthalten.

Lithiumsulfat und Lithiumacetat sind als Härtungsbeschleuniger bekannt. Es war daher überraschend, dass Lithiumsulfat und Lithiumacetat in der pastösen ersten Komponente enthalten sein können, ohne dass das schnell härtende hydraulische Bindemittel vorzeitig abbindet.

In die erhaltene Mischung aus den Komponenten (a1), (a2) und (a3) wird dann mindestens ein organisches polymeres Bindemittel (a4) eingebracht und eingemischt.

Das organische Bindemittel (a4) ist ein natürliches oder synthetisches Polymer oder Copolymer, das aufgebaut ist aus Monomeren wie (Meth)acrylsäureestern, Styrol, (Meth)acrylsäure, Acrylamid, Acrylnitril, carboxyliertes Styrol, Butadien, Vinylacetat, Ethylen oder Propylen. Beispiele für geeignete Polymere sind Reinacrylate, insbesondere auf Basis von n-Butylacrylat oder 2-Ethylhexylacrylat oder Copolymeren davon, StyrolacrylatCopolymere, Styrol-Butadien-Copolymere, carboxylierte Styrol-Butadien- Copolymere, Vinylacetat-Polymere, Ethylen-Vinylacetat-Copolymere, bevorzugt Copolymere auf Basis von n-Butylacrylat, Acrylnitril und Methacrylsäure.

Die pastöse erste Komponente liegt im Allgemeinen wasserhaltig vor und kann neben den Bestandteilen (a1) bis (a4) auch Additive wie Rheologie-Additive, z.B. Verdicker, Netzmittel, Entschäumer, Biozide und/oder Konservierungsmittel als Komponente (a5) enthalten.

Die pastöse erste Komponente umfasst vorzugsweise, jeweils bezogen auf das Gesamtgewicht der pastösen ersten Komponente, wobei sich die Mengen auf 100 Gew.-% ergänzen:

| | |
|---|---|
| Komponente (a1): | 5 bis 30 Gew.-%, insbesondere 5 bis 25 Gew.-%; |
| Komponente (a2): | 0,1 bis 8 Gew.-%, insbesondere 0,5 bis 5 Gew.-%; |
| Komponente (a3): | 0,5 bis 5 Gew.-%, insbesondere 0,5 bis 4 Gew.-% oder 0,8 bis 4 Gew.-%; |
| Komponente (a4): | 5 bis 60 Gew.-%, insbesondere 30 bis 50 Gew.-%; |
| Komponente (a5): | 0 bis 5 Gew.-%, insbesondere 0,5 bis 4 Gew.-%; |
| Wasser: | 10 bis 60 Gew.-%, insbesondere 10 bis 45 Gew.-%, vorzugsweise 10 - 38 Gew.-%. |

Die Menge der Komponenten einschließlich Wasser wird so gewählt, dass eine pastöse Mischung entsteht, d.h. die pastöse erste Komponente weist im allgemeinen eine Viskosität im Bereich von 1000 mPas bis 20000 mPas auf, bestimmt mittels Brookfield DVII plus, Spindel 7, 10 Upm. Erstrebenswert ist insbesondere eine pastöse erste Komponente mit einem Wassergehalt kleiner 45 Gew.-%, vorzugsweise mit einem Wassergehalt kleiner 38 Gew.-%.

Das Gewichtsverhältnis von Komponente (a4) zu Komponente (a1) liegt im Allgemeinen im Bereich von 1 : 1 bis 1 : 0,08, vorzugsweise 1 : 0,1 bis 1: 0,4.

Die pastöse erste Komponente wird hergestellt durch Vermischen der Komponenten mit üblichen Mischtechniken und Mischvorrichtungen. Dabei kann die Komponente (a4) in Form einer wässrigen Polymeremulsion, die im allgemeinen 30 bis 80 Gew.-%, insbesondere 50 - 70 Gew.-% an Polymer, bezogen auf die Gesamtmenge der Polymeremulsion, enthält, zur Anwendung kommen. Die Komponente (a4) kann aber auch in Form eines Polymerpulvers eingesetzt werden. Auch die Komponenten (a2) und (a3) können in Form einer wässrigen Lösung (z.B. Phosphorsäure in Form einer 83-90%igen wässrigen Lösung) oder in Pulverform zur Anwendung kommen.

Die Additive (a5) und Wasser werden zweckmäßigerweise in das Gemisch der Komponenten (a1) und (a2) oder (a1), (a2) und (a3) gegeben (zweckmäßigerweise in der Reihenfolge Entschäumer, Netzmittel, Wasser, Biozide). Abschließend wird die Komponente (a4) eingebracht. Auf diese Weise erhält man eine lagerstabile und knötchenfreie pastöse erste Komponente.

Vor Anwendung der erfindungsgemäßen Beschichtungsmasse werden im Allgemeinen noch mineralische Füllstoffe, wie Quarzsand, Carbonate, Mikrosilika oder ein Gemisch von zwei oder mehreren davon als Komponente (a6) zugegeben. Die pastöse erste Komponente weist dann, jeweils bezogen auf das Gesamtgewicht der pastösen ersten Komponente, folgende Zusammensetzung auf:

| | |
|---|---|
| Komponente (a1): | 1 bis 28,5 Gew.-%, insbesondere 1,5 bis 22,5 Gew.-%; |
| Komponente (a2): | 0,02 bis 7,6 Gew.-%, insbesondere 0,15 bis 4,5 Gew.-%; |
| Komponente (a3): | 0,1 bis 4,75 Gew.-%, insbesondere 0,24 bis 3,6 Gew.-%; |
| Komponente (a4): | 1 bis 57 Gew.-%, insbesondere 9 bis 45 Gew.-%; |
| Komponente (a5): | 0 bis 4,75 Gew.-%, insbesondere 0,15 bis 3,6 Gew.-%; |
| Komponente (a6): | 5 bis 80 Gew.-%, insbesondere 10 bis 70 Gew.-%; |
| Wasser | 2 bis 57 Gew.-%, insbesondere 3 bis 40,5 Gew.-%, vorzugsweise 3 bis 34,2 Gew.-%. |

Die zweite Komponente (b) enthält einen Aktivator, bei dem es sich um ein Alkalisierungsmittel (pH-Trigger) handelt. In Frage kommen hierfür beispielsweise Alkali- und Erdalkalimetallhydroxide, -oxide und -carbonate oder Portlandzement oder Gemische davon. Bevorzugt sind Alkalimetallhydroxide wie Natriumhydroxid, Kaliumhydroxid und Lithiumhydroxid oder Gemische davon. Besonders bevorzugt sind Natriumhydroxid oder Kaliumhydroxid oder ein Gemisch davon. Die Alkalisierungsmittel können in Form einer wässrigen Lösung, z.B. einer 10 bis 30%igen Lösung, oder in fester Form eingesetzt werden.

Die zweite Komponente dient dazu, die Aushärtung und Trocknung zu aktivieren. Sie wird daher erst unmittelbar vor der Anwendung der Beschichtungsmasse mit der pastösen ersten Komponente vermischt. Unter "unmittelbar" ist hier weniger als 10 min. vor der Anwendung zu verstehen. Die Menge an Alkalisierungsmittel wird so gewählt, dass der pH-Wert auf mindestens 10, insbesondere mindestens 12 steigt. Da der Härtungsbeschleuniger bereits in der pastösen ersten Komponente enthalten sein kann, gestaltet sich die Zubereitung und Anwendung der erfindungsgemäßen Beschichtungsmasse besonders einfach, wobei die pastöse erste Komponente am Verarbeitungsort der Beschichtungsmasse vorgehalten werden kann. Über die Menge an Alkalisierungsmittel bzw. den sich daraus ergebenden pH-Wert kann die Verarbeitungszeit in einem weiten Bereich geregelt werden.

Zur Anwendung wird die erfindungsgemäße Beschichtungsmasse in flüssiger Form in einer oder mehreren Schichten auf ein Substrat, z.B. auf einen bauseitigen Untergrund, in üblicher Weise, beispielsweise mit einem Roller oder einer Spachtel, aufgetragen. Geeignete Substrate sind beispielsweise Beton, Stein, Ziegel, Gips, Gipskarton, Holz, Glas, Aluminium, Kunststoff oder Bitumen.

Gegenstand der Erfindung ist auch eine wässrige Beschichtungsmasse zur Applikation auf ein Substrat, die in mindestens zwei Teilen (I) und (II) vorliegt, wobei Teil (I) eine pastöse erste Komponente (a) und Teil (II) eine mindestens ein Alkalisierungsmittel als Aktivator umfassende Komponente (b) umfasst, wobei die pastöse erste Komponente:
a1) mindestens ein schnell härtendes hydraulisches Bindemittel, ausgewählt unter Calciumaluminatzement, Calciumsulfoaluminatzement oder einer Mischung davon,
a2) mindestens einen Verzögerer, ausgewählt unter Borsäure, ortho-Phosphorsäure, meta-Phosphorsäure, Phosphonsäure (phosphorige Säure) und einem organischen Phosphonsäurederivat und
a3) mindestens einen Härtungsbeschleuniger, ausgewählt unter Lithiumsulfat, Lithiumacetat oder eine Mischung davon, und
a4) mindestens ein organisches polymeres Bindemittel,
umfasst.

Insbesondere ist die pastöse erste Komponente nach dem oben beschriebenen Verfahren erhältlich.

Die Komponenten (I) und (II) und deren Mengen bzw. Mengenverhältnisse sind in der Zusammensetzung und in der Beschichtungsmasse wie oben im Zusammenhang mit dem Verfahren zur Herstellung der Beschichtungsmasse beschrieben.

Mit Hilfe der erfindungsgemäßen Beschichtungsmasse ist es möglich, die Vorzüge mineralischer und pastösen Systeme in sich zu vereinen. Beispielsweise werden die mechanischen Eigenschaften der erhaltenen Beschichtungen, insbesondere die Rissüberbrückungseigenschaften verbessert. Durch den stark reduzierten Zementeinsatz und den Einsatz eines schnell härtenden hydraulischen Bindemittels werden weiterhin die Rissneigung, Nachversprödung und Schwund stark reduziert ohne die Haftzugfestigkeit mineralischer Systeme einzuschränken. So ist die Haftzugfestigkeit einer aus der erfindungsgemäßen Beschichtungsmasse hergestellten Schutzschicht ≥ 0,5 N/mm², bevorzugt ≥ 1 N/mm². Der Wert für die statische Rissüberbrückung gemäß abP (allg. bauamtl. Prüfzeugnis) ist ≥ 0,4mm, bevorzugt ≥1 mm, noch bevorzugter ≥ 2 mm. Die dynamische Rissüberbrückung gemäß EN 14891 (Abdichtungssysteme unter der Fliese) ist ≥ 0,75mm vorzugsweise ≥ 1 mm.

Darüber hinaus zeigt die erfindungsgemäße Beschichtungsmasse gute Durchtrocknungsergebnisse, insbesondere bei hoher Luftfeuchtigkeit (80-100%) und ist ohne großen Mischaufwand herstellbar.

Die erfindungsgemäße Beschichtungsmasse ist daher insbesondere geeignet zur Herstellung einer Abdichtmembran auf einem bauseitigen Untergrund. Zu nennen sind hier beispielsweise die Abdichtung im Verbund mit Fliesen, Abdichtungen von Flüssigkeitsbehältern, Bauwerksabdichtungen an der Gebäudehülle (Dach, Balkone, Terrassen, Keller), Infrastrukturgebäuden wie Brücken, Wasserversorgungsanlagen und Wasserentsorgungsanlagen, sowie Tunnelbauwerken.

Die nachfolgenden Beispiele erläutern die Erfindung ohne sie zu begrenzen.

### Beispiel 1

Es wurden Beschichtungsmassen der in Tabelle 1 angegebenen Zusammensetzung hergestellt, wobei zu der Suspension aus passiviertem Schnellzement (enthaltend Aluminatzement plus Verzögerer) zunächst Lithiumsulfat und dann das Polymer gegeben wurden. Zuletzt wurde, soweit vorgesehen, die Natronlauge zugegeben.

**Tabelle 1**

| | Versuch 1 | Versuch 2 | Versuch 3 | Versuch 4 | Versuch 5 |
|---|---|---|---|---|---|
| Suspension aus passiviertem Schnellzement (entsprechend slurry 2 der US 2014/0343194)¹⁾ | 90 | 90 | 90 | - | - |
| Portlandzement 52,5 N | | | | | 188 |
| Polymer²⁾ | 180 | 180 | 180 | 180 | 132,7 |
| Wasser | 120 | 120 | 120 | 156 | 117 |
| Dispergiermittel | 5 | 5 | 5 | 5 | - |
| Entschäumer | 4 | 4 | 4 | 4 | 3,7 |
| Lithiumsulfat | 8 | 8 | - | - | - |
| Kalksteinmehl | 389 | 389 | 389 | 453 | 75 |
| Feiner Sand | 200 | 200 | 200 | 200 | 483 |
| Mikrosilika | 1 | 1 | 1 | 1 | - |
| Zelluloseether | 0,75 | 0,75 | 0,75 | 0,75 | - |
| Verdicker | 3 | 3 | 3 | 0,75 | 0,6 |
| Summe | 1000 | 1000 | 1000 | 1000 | 1000 |
| pH Trigger (20%ige NaOH) | --- | 10 | 10 | | |

| | | | | | |
|---|---|---|---|---|---|
| ¹⁾ Wasser 38,115%; Phosphorsäure (85%ig) 1,19%; Dispergiermittel (Natriumpolyacrylat) 1%; Aluminatzement 59,38%; Xanthangummi 0,3%; Biocid (Isothiazolone) 0,015 % (jeweils Gew.-%, bezogen auf das Gesamtgewicht der Suspension) ²⁾ Copolymer auf Basis von n-Butylacrylat, Acrylnitril und Methacrylsäure. | | | | | |

Die Beschichtungsmasse mit obiger Zusammensetzung wurde mit einem Labormischer angemischt. Von den Massen aus den Versuchen 1 bis 3 wurden jeweils 250g in einen Kunststoffbecher gefüllt und mit einem Deckel fest verschlossen, so dass keine Feuchtigkeit entweichen kann und sich nach kurzer Zeit eine Luftfeuchtigkeit über der Masse von 100% einstellt. Versuch 1 entspricht somit der pastösen ersten Komponente (a) ohne Aktivierungsmittel (b). In einem zweiten Versuch wurde die gleiche Masse mit Natronlauge aktiviert und in gleicher Weise wie in Versuch 1 in einen Becher gefüllt. Beide Becher wurden bei geschlossenem Deckel bei Raumtemperatur (23°C) gelagert. In bestimmten Zeitabständen (Topfzeit) wurden die Becher geöffnet und die Viskosität durch Rühren mit einem Messerspatel geprüft. Die Ergebnisse sind in Tabelle 2 angegeben.

**Tabelle 2**

| **Topfzeit** | Masse aus Versuch 1 | Masse aus Versuch 2 | Masse aus Versuch 3 |
|---|---|---|---|
| Nach 15 min | Kein Ansteifen | Zäh | Kein Ansteifen |
| Nach 30 min | Kein Ansteifen | Zäh | Kein Ansteifen |
| Nach 60 min | Kein Ansteifen | Plastisch | Kein Ansteifen |
| Nach 1:30 h | Kein Ansteifen | hart | Kein Ansteifen |
| Nach 2 h | Kein Ansteifen | | Kein Ansteifen |
| Nach 2:30 h | Kein Ansteifen | | Kein Ansteifen |
| Nach 3 h | Kein Ansteifen | | Kein Ansteifen |
| Nach 3:30 h | Kein Ansteifen | | Kein Ansteifen |
| Nach 4 h | Kein Ansteifen | | Kein Ansteifen |
| Nach 4:30 h | Kein Ansteifen | | Kein Ansteifen |
| Nach 5 h | Kein Ansteifen | | Kein Ansteifen |
| Nach 7 h | Kein Ansteifen | | Kein Ansteifen |
| Nach 24 h | Kein Ansteifen | | Hart |

Die aktivierte Masse aus Versuch 2 ist nach 1:30 h hart, wohingegen bei der nicht aktivierten Masse aus Versuch 1 selbst nach 24 h keine Härtung zu beobachten ist. Ebenso ist die aktivierte Masse aus Versuch 3, die allerdings im Gegensatz zur Masse aus Versuch 2 keinen Härtungsbeschleuniger enthält, nach 7 h noch nicht hart.

### Beispiel 2

Drei Becher werden mit den Massen 1 bis 3 aus Beispiel 1 in gleicher Weise vorbereitet und bei 5°C gelagert. Auch hier wird nach entsprechenden Zeitabständen die Durchhärtung der Masse geprüft.

| **Topfzeit** | Masse aus Versuch 1 | Masse aus Versuch 2 | Masse aus Versuch 3 |
|---|---|---|---|
| Nach 15 min | Kein Ansteifen | Kein Ansteifen | Kein Ansteifen |
| Nach 30 min | Kein Ansteifen | Kein Ansteifen | Kein Ansteifen |
| Nach 60 min | Kein Ansteifen | Kein Ansteifen | Kein Ansteifen |
| Nach 1:30 h | Kein Ansteifen | zäh | Kein Ansteifen |
| Nach 2 h | Kein Ansteifen | Zäh | Kein Ansteifen |
| Nach 2:30 h | Kein Ansteifen | Zäh/plastisch | Kein Ansteifen |
| Nach 3 h | Kein Ansteifen | Plastisch | Kein Ansteifen |
| Nach 3:30 h | Kein Ansteifen | Plastisch | Kein Ansteifen |
| Nach 4 h | Kein Ansteifen | Hart | Kein Ansteifen |
| Nach 4:30 h | Kein Ansteifen | | Kein Ansteifen |
| Nach 5 h | Kein Ansteifen | | Kein Ansteifen |
| Nach 7 h | Kein Ansteifen | | Kein Ansteifen |
| Nach 24 h | Kein Ansteifen | | Kein Ansteifen |

Beispiel 2 zeigt, dass das aktivierte System bei niedrigen Temperaturen im Vergleich zu Beispiel 1 zwar verzögert reagiert, aber immer noch durchhärtet. Das nichtaktivierte (Masse aus Versuch 1) und auch das aktivierte aber nicht beschleunigte System (Masse aus Versuch 3) zeigen innerhalb von 24 h keine Reaktion.

### Beispiel 3

Die Masse aus Versuch 1 sowie 20%ige Natronlauge und zwei Betonplatten wurden in einem Klimaschrank bei 7°C und 95% Luftfeuchtigkeit 24h gelagert. Danach wurde eine Betonplatte mit der Masse aus Versuch 1 beschichtet (Platte 1). Die Auftragsmenge betrug hierbei 1,5 kg/m². Die zweite Betonplatte wurde mit der aktivierten Formulierung (Masse aus Versuch 1 + 1% Natronlauge) in gleicher Weise beschichtet (Platte 2). Nach dem Beschichtungsvorgang wurden beide Betonplatte sofort wieder bei 7°C und 95% Luftfeuchte im Klimaschrank gelagert. Es wurde die Zeit bis zur Durchhärtung der Schichten bestimmt (Trocknungszeit). Dazu wurde die Beschichtung mit einem Finger berührt und dieser unter leichtem Druck um 90 Grad auf der Oberfläche gedreht. Eine ausreichende Durchhärtung ist dann gegeben, wenn keine Druckstellen oder Beschädigungen zu erkennen sind. Die Schicht ist dann soweit verfestigt, dass eine weitere zweite Schicht mit Roller oder Zahnspachtel auftragbar ist.

Die Versuche werden bei unterschiedlichen Luftfeuchtigkeiten wiederholt, die Ergebnisse sind in Tabelle 3 gezeigt:

**Tabelle 3**

| | Trocknungszeit (min) | |
|---|---|---|
| | Platte 1 | Platte 2 |
| Temp.: 7°C bei 80% Feuchte | | |
| 1. Schicht | 195 | 125 |
| 2. Schicht | 180 | 110 |
| Temp.: 7°C bei 85% Feuchte | | |
| 1. Schicht | 230 | 140 |
| 2. Schicht | 240 | 130 |
| Temp.: 7°C bei 90% Feuchte | | |
| 1. Schicht | 270 | 160 |
| 2. Schicht | 255 | 140 |
| Temp.: 7°C bei 95% Feuchte | | |
| 1. Schicht | 340 | 300 |
| 2. Schicht | 335 | 300 |

Die Versuche zeigen, dass das neue System mit Aktivierung im Bereich von 80 - 90% Luftfeuchtigkeit und bei niedriger Temperatur besonders effektiv ist.

### Vergleich der Rissüberbrückung und Haftzugfestigkeit:

Die Massen aus den Versuchen 1, 4 und 5 in Beispiel 1 werden einer vergleichenden Prüfung der Rissüberbrückung nach DIN EN 14891 und der Haftzugfestigkeit nach DIN EN 1348 unterzogen. Die Ergebnisse sind in Tabelle 4 gezeigt.

**Tabelle 4**

| **Prüfung** | **Masse aus Versuch 1** | **Masse aus Versuch 4** | **Masse aus Versuch 5** |
|---|---|---|---|
| Rissüberbrückung nach DIN EN 14891 (Auftrag: 3 kg/m²) | 1,49 mm | 2,85 mm | 0,8 mm |
| Haftzugfestigkeit nach DIN EN 1348 nach 28 Tage Lagerung bei 23 °C, 50 % rel. Luftfeuchtigkeit | 1,12 N/mm² | 0,76 N/mm² | 1,7 N/mm² |

Die Ergebnisse aus Tabelle 4 zeigen, dass das neue aktivierte System aus Versuch 1 im Vergleich zu einer normalen zementären Dichtungsschlämme (Versuch 5) eine deutlich bessere Rissüberbrückung und im Vergleich zu dem zementfreien System aus Versuch 4 eine deutlich bessere Haftzugfestigkeit aufweist.

## Patentansprüche

1. Verfahren zur Herstellung einer wässrigen Beschichtungsmasse zur Applikation auf ein Substrat, das die folgenden Schritte in der angegebenen Reihenfolge umfasst:
A) Bereitstellung einer wässrigen pastösen ersten Komponente (a) durch
(a1) Vermischen von mindestens einem schnell härtenden hydraulischen Bindemittel, ausgewählt unter Calciumaluminatzement, Calciumsulfo-aluminatzement oder einer Mischung davon, und
(a2) mindestens einem Verzögerer, ausgewählt unter Borsäure, ortho-Phosphorsäure, meta-Phosphorsäure, Phosphonsäure (phosphorige Säure), einem organischen Phosphonsäurederivat und Gemischen davon,
(a3) Zugabe mindestens eines Härtungsbeschleunigers, ausgewählt unter Lithiumsulfat, Lithiumacetat oder einer Mischung davon, in das Gemisch aus (a1) und (a2),
(a4) Zugabe mindestens eines organischen polymeren Bindemittels in das Gemisch aus (a1) bis (a3), und
B) Zugabe einer zweiten Komponente (b), die mindestens einen Aktivator umfasst, wobei der Aktivator ein Alkalisierungsmittel ist.

2. Verfahren nach Anspruch 1, wobei die pastöse erste Komponente zusätzlich mindestens ein Additiv als Komponente (a5) umfasst.

3. Verfahren nach einem der vorhergehenden Ansprüche, wobei die pastöse erste Komponente umfasst, jeweils bezogen auf das Gesamtgewicht der pastösen ersten Komponente:
| | |
|---|---|
| Komponente (a1): | 5 bis 30 Gew.-%, insbesondere 5 bis 25 Gew.-%; |
| Komponente (a2): | 0,1 bis 8 Gew.-%, insbesondere 0,5 bis 5 Gew.-%; |
| Komponente (a3): | 0,5 bis 5 Gew.-%, insbesondere 0,8 bis 4 Gew.-%; |
| Komponente (a4): | 5 bis 60 Gew.-%, insbesondere 30 bis 50 Gew.-%; |
| Komponente (a5): | 0 bis 5 Gew.-%, insbesondere 0,5 bis 4 Gew.-%; |
| Wasser: | 10 bis 60 Gew.-%, insbesondere 10 bis 45 Gew.%, vorzugsweise 10 - 38 Gew.-%; |
wobei sich die Mengen auf 100 Gew.-% ergänzen.

4. Verfahren nach einem der vorhergehenden Ansprüche, wobei das Gewichtsverhältnis von Komponente (a4) zu Komponente (a1) im Bereich von 1 : 1 bis 1 : 0,08, vorzugsweise 1 : 0,1 bis 1: 0,4, liegt.

5. Verfahren nach einem der vorhergehenden Ansprüche, wobei die pastöse erste Komponente zusätzlich mineralische Füllstoffe als Komponente (a6) umfasst.

6. Verfahren nach Anspruch 5, wobei die pastöse erste Komponente umfasst, jeweils bezogen auf das Gesamtgewicht der pastösen ersten Komponente:
| | |
|---|---|
| Komponente (a1): | 1 bis 28,5 Gew.-%, insbesondere 1,5 bis 22,5 Gew.-%; |
| Komponente (a2): | 0,02 bis 7,6 Gew.-%, insbesondere 0,15 bis 4,5 Gew.-%; |
| Komponente (a3): | 0,1 bis 4,75 Gew.-%, insbesondere 0,24 bis 3,6 Gew.-%; |
| Komponente (a4): | 1 bis 57 Gew.-%, insbesondere 9 bis 45 Gew.-%; |
| Komponente (a5): | 0 bis 4,75 Gew.-%, insbesondere 0,15 bis 3,6 Gew.-%; |
| Komponente (a6): | 5 bis 80 Gew.-%, insbesondere 10 bis 70 Gew.-%; |
| Wasser | 2 bis 57 Gew.-%, insbesondere 3 bis 40,5 Gew.-%, vorzugsweise 3 - 34,2 Gew.-%. |

7. Verfahren nach Anspruch 5 oder 6, wobei der Anteil der pastösen ersten Komponente (a) im Bereich von 90 bis 98 Gew.-% und der Anteil der zweiten Komponente (b) im Bereich von 2 bis 10 Gew.-% liegt, bezogen auf das Gesamtgewicht der Beschichtungsmasse.

8. Verfahren nach einem der vorhergehenden Ansprüche, wobei der Verzögerer Phosphorsäure oder Borsäure oder ein Gemisch davon ist.

9. Verfahren nach einem der vorhergehenden Ansprüche, wobei der Härtungsbeschleuniger Lithiumsulfat ist.

10. Verfahren nach einem der vorhergehenden Ansprüche, wobei der Aktivator ein Alkalimetallhydroxid, insbesondere Natrium- oder Kaliumhydroxid oder ein Gemisch davon ist.

11. Wässrige Beschichtungsmasse zur Applikation auf ein Substrat, die in mindestens zwei Teilen (I) und (II) vorliegt, wobei Teil (I) eine pastöse erste Komponente (a) umfasst, und Teil (II) zum Teil (I) zugebbar ist, aber noch nicht zugegeben wurde, und eine mindestens ein Alkalisierungsmittel als Aktivator umfassende Komponente (b) umfasst, wobei die pastöse erste Komponente umfasst:
(a1) mindestens ein schnell härtendes hydraulisches Bindemittel, ausgewählt unter Calciumaluminatzement, Calciumsulfoaluminatzement oder einer Mischung davon,
(a2) mindestens einen Verzögerer, ausgewählt unter Borsäure, ortho-Phosphorsäure, meta-Phosphorsäure, Phosphonsäure (phosphorige Säure) und einem organischen Phosphonsäurederivat und
(a3) mindestens einen Härtungsbeschleuniger, ausgewählt unter Lithiumsulfat, Lithiumacetat oder eine Mischung davon, und
(a4) mindestens ein organisches polymeres Bindemittel.

12. Verwendung der Beschichtungsmasse nach Anspruch 11 zur Herstellung einer Abdichtungsmembran.

13. Verfahren zur Herstellung einer Abdichtungsmembran, umfassend die Schritte, wobei man
a) eine wässrige Beschichtungsmasse wie in einem der Ansprüche 1 bis 10 definiert, herstellt und
b) die Beschichtungsmasse auf ein Substrat aufträgt und aushärten lässt.

## Claims

1. A process for producing an aqueous coating composition for application to a substrate, comprising the following steps in the specified order:
A) provision of an aqueous pastelike first component (a) by:
(a1) mixing of at least one fast-curing hydraulic binder selected from calcium aluminate cement, calcium sulfoaluminate cement, or a mixture thereof, and
(a2) at least one retardant selected from boric acid, orthophosphoric acid, metaphosphoric acid, phosphonic acid (phosphorous acid), an organic phosphonic acid derivative and mixtures thereof,
(a3) addition of at least one curing accelerator selected from lithium sulfate, lithium acetate, or a mixture thereof to the mixture from (a1) and (a2),
(a4) addition of at least one organic polymeric binder to the mixture from (a1) to (a3), and
B) addition of a second component (b) comprising at least one activator, the latter being an alkalifying agent.

2. The process according to claim 1, the pastelike first component further comprising at least one additive as component (a5).

3. The process according to any of the preceding claims, the pastelike first component comprising, based in each case on the total weight of the pastelike first component:
| | |
|---|---|
| component (a1) : | 5 to 30 wt%, more particularly 5 to 25 wt%; |
| component (a2) : | 0.1 to 8 wt%, more particularly 0.5 to 5 wt%; |
| component (a3): | 0.5 to 5 wt%, more particularly 0.8 to 4 wt%; |
| component (a4) : | 5 to 60 wt%, more particularly 30 to 50 wt%; |
| component (a5) : | 0 to 5 wt%, more particularly 0.5 to 4 wt%; |
| water: | 10 to 60 wt%, more particularly 10 to 45 wt%, preferably 10-38 wt%; |
the amounts adding up to 100 wt%.

4. The process according to any of the preceding claims, the weight ratio of component (a4) to component (a1) being in the range from 1:1 to 1:0.08, preferably 1:0.1 to 1:0.4.

5. The process according to any of the preceding claims, the pastelike first component further comprising mineral fillers as component (a6).

6. The process according to claim 5, the pastelike first component comprising, based in each case on the total weight of the pastelike first component:
| | |
|---|---|
| component (a1): | 1 to 28.5 wt%, more particularly 1.5 to 22.5 wt%; |
| component (a2): | 0.02 to 7.6 wt%, more particularly 0.15 to 4.5 wt%; |
| component (a3): | 0.1 to 4.75 wt%, more particularly 0.24 to 3.6 wt%; |
| component (a4): | 1 to 57 wt%, more particularly 9 to 45 wt%; |
| component (a5): | 0 to 4.75 wt%, more particularly 0.15 to 3.6 wt%; |
| component (a6) : | 5 to 80 wt%, more particularly 10 to 70 wt%; |
| water: | 2 to 57 wt%, more particularly 3 to 40.5 wt%, preferably 3-34.2 wt%. |

7. The process according to claim 5 or 6, the fraction of the pastelike first component (a) being in the range from 90 to 98 wt% and the fraction of the second component (b) being in the range from 2 to 10 wt%, based on the total weight of the coating composition.

8. The process according to any of the preceding claims, the retardant being phosphoric acid or boric acid or a mixture thereof.

9. The process according to any of the preceding claims, the curing accelerator being lithium sulfate.

10. The process according to any of the preceding claims, the activator being an alkali metal hydroxide, more particularly sodium hydroxide or potassium hydroxide, or a mixture thereof.

11. An aqueous coating composition for application to a substrate, being present in at least two parts (I) and (II), part (I) comprising a pastelike first component (a) and where part (II) can be added to part (I) but has not yet been added and comprises a component (b) comprising at least one alkalifying agent as activator, whereby the pastelike first component comprises:
a1)at least one fast-curing hydraulic binder selected from calcium aluminate cement, calcium sulfoaluminate cement, or a mixture thereof,
a2)at least one retardant selected from boric acid, orthophosphoric acid, metaphosphoric acid, phosphonic acid (phosphorous acid), and an organic phosphonic acid derivative, and
a3) at least one curing accelerator selected from lithium sulfate, lithium acetate, or a mixture thereof, and
a4)at least one organic polymeric binder.

12. The use of the coating composition according to claim 11 for producing a sealing membrane.

13. A process for preparing a sealing membrane comprising the steps of
a) preparing an aqueous coating composition as defined in any of claims 1 to 10, and
b) applying the coating composition to a substrate and leaving it to cure.

## Revendications

1. Procédé pour la préparation d'une masse de revêtement aqueuse pour l'application sur un substrat, qui comprend les étapes suivantes dans l'ordre indiqué :
A) mise à disposition d'un premier composant pâteux aqueux (a) par
(a1) mélange d'au moins un liant hydraulique à durcissement rapide, choisi parmi le ciment calciumaluminate, le ciment calciumsulfoaluminate ou un mélange correspondant, et
(a2) au moins un retardateur, choisi parmi l'acide borique, l'acide orthophosphorique, l'acide métaphosphorique l'acide phosphonique (acide phosphoneux), un dérivé organique de l'acide phosphonique et des mélanges correspondants,
(a3) ajout d'au moins un accélérateur de durcissement, choisi parmi le sulfate de lithium, l'acétate de lithium ou des mélanges correspondants, dans le mélange de (a1) et (a2), (a4) ajout d'au moins un liant polymère organique dans le mélange de (a1) à (a3), et
B) ajout d'un deuxième composant (b), qui comprend au moins un activateur, l'activateur étant un agent alcalinisant.

2. Procédé selon la revendication 1, le premier composant pâteux comprenant de plus au moins un additif en tant que composant (a5).

3. Procédé selon l'une quelconque des revendications précédentes, le premier composant pâteux comprenant, à chaque fois par rapport au poids total du premier composant pâteux :
| | |
|---|---|
| composant (a1) : | 5 à 30% en poids, en particulier 5 à 25% en poids ; |
| composant (a2) : | 0,1 à 8% en poids, en particulier 0,5 à 5% en poids ; |
| composant (a3) : | 0,5 à 5% en poids, en particulier 0,8 à 4% en poids ; |
| composant (a4) : | 5 à 60% en poids, en particulier 30 à 50% en poids ; |
| composant (a5) : | 0 à 5% en poids, en particulier 0,5 à 4% en poids ; |
| eau : | 10 à 60% en poids, en particulier 10 à 45% en poids, de préférence 10 à 38% en poids ; |
les quantités se complétant à 100%.

4. Procédé selon l'une quelconque des revendications précédentes, le rapport pondéral du composant (a4) au composant (a1) se situant dans la plage de 1:1 à 1:0,08, de préférence 1:0,1 à 1:0,4.

5. Procédé selon l'une quelconque des revendications précédentes, le premier composant pâteux comprenant de plus des charges minérales en tant que composant (a6).

6. Procédé selon la revendication 5, le premier composant pâteux comprenant, à chaque fois par rapport au poids total du premier composant pâteux :
| | |
|---|---|
| composant (a1) : | 1 à 28,5% en poids, en particulier 1,5 à 22,5% en poids ; |
| composant (a2) : | 0,02 à 7,6% en poids, en particulier 0,15 à 4,5% en poids ; |
| composant (a3) : | 0,1 à 4,75% en poids, en particulier 0,24 à 3,6% en poids ; |
| composant (a4) : | 1 à 57% en poids, en particulier 9 à 45% en poids ; |
| composant (a5) : | 0 à 4,75% en poids, en particulier 0,15 à 3,6% en poids ; |
| composant (a6) : | 5 à 80% en poids, en particulier 10 à 70% en poids ; |
| eau : | 2 à 57% en poids, en particulier 3 à 40,5% en poids, de préférence 3 à 34,2% en poids. |

7. Procédé selon la revendication 5 ou 6, la proportion du premier composant pâteux (a) se situant dans la plage de 90 à 98% en poids et la proportion du deuxième composant (b) se situant dans la plage de 2 à 10% en poids, par rapport au poids total de la masse de revêtement.

8. Procédé selon l'une quelconque des revendications précédentes, le retardateur étant l'acide phosphorique ou l'acide borique ou un mélange correspondant.

9. Procédé selon l'une quelconque des revendications précédentes, l'accélérateur de durcissement étant le sulfate de lithium.

10. Procédé selon l'une quelconque des revendications précédentes, l'activateur étant un hydroxyde de métal alcalin, en particulier de l'hydroxyde de sodium ou de l'hydroxyde de potassium ou un mélange correspondant.

11. Masse de revêtement aqueuse pour l'application sur un substrat, qui est présente en au moins deux parties (I) et (II), la partie (I) comprenant un premier composant pâteux (a), et la partie (II) pouvant être ajoutée à la partie (I), mais n'ayant pas encore été ajoutée, et comprenant un composant (b) comprenant au moins un agent alcalinisant en tant qu'activateur, le premier composant pâteux comprenant :
(a1) au moins un liant hydraulique à durcissement rapide, choisi parmi le ciment calciumaluminate, le ciment calciumsulfoaluminate ou un mélange correspondant,
(a2) au moins un retardateur, choisi parmi l'acide borique, l'acide orthophosphorique, l'acide métaphosphorique l'acide phosphonique (acide phosphoneux), un dérivé organique de l'acide phosphonique et
(a3) au moins un accélérateur de durcissement, choisi parmi le sulfate de lithium, l'acétate de lithium ou un mélange correspondant, et
(a4) au moins un liant polymère organique.

12. Utilisation d'une masse de revêtement selon la revendication 11 pour la préparation d'une membrane d'étanchéité.

13. Procédé pour la préparation d'une membrane d'étanchéité, comprenant les étapes où l'on
a) prépare une masse de revêtement aqueuse telle que définie selon l'une quelconque des revendications 1 à 10 et
b) on applique la masse de revêtement sur un substrat et on laisse durcir.
